# EUROPEAN PATENT APPLICATION

(11) **EP 1 731 248 A1**
(43) Date of publication of application: **13.12.2006**
(21) Application number: 05728924.1
(22) Date of filing: 30.03.2005
(51) Int. Cl.: B23B 13/12

(54) **MATERIAL GUIDE DEVICE AND AUTOMATIC LATHE**

(30) Priority: 31.03.2004 JP 2004107392
(71) Applicant: Citizen Watch Co., Ltd., Nishitokyo-shi, Tokyo 188-8511 (JP)
(72) Inventor: ANDO, Yosuke, CITIZEN WATCH CO., LTD., Nishitokyo-shi, Tokyo 188-8511 (JP); ASAHARA, Noriyuki, CITIZEN PREC. MACHINERYCo. Ltd, Kitasaku-gun, Nagano 389-0206 (JP)
(74) Representative: Ruff, Michael
(86) International application number: PCT/JP2005/006720
(87) International publication number: WO 2005/095033

(57) **Abstract**

A material guide device (10) comprises a guide bush (22) having a material support part (20) elastically displaceable in a radial direction, and an adjusting mechanism (24) adjusting the radial dimension of the material support part of the guide bush. The adjusting mechanism further comprises a carrying member (40) having a front face (40b) disposed around the material lead-out end (22b) of the guide bush and carrying the guide bush, a pressing member (42) disposed near the front face of the carrying member movably relative to the carrying member and linearly movably relative to the guide bush along a guiding axis and causing the radial elastic displacement on the material support part by the relative linear motion, and a feed screw structure (44) causing the relative linear motion between the pressing member and the guide bush by the screwing motion of a screw.

## Description

### MATERIAL GUIDE DEVICE AND AUTOMATIC LATHE

### TECHNICAL FIELD

The present invention relates to a material guide device for supporting an objective material (or a workpiece), near its machined portion, during a machining operation. The present invention also relates to an automatic lathe including the material guide device.

### BACKGROUND ART

It is known that a machine tool, such as an NC lathe, capable of performing various automatic turning operations (generally referred to as an automatic lathe in this specification), can be equipped with a material guide device, as an auxiliary support device, installed on a lathe bed in proximity to a working position for machining, performed by a tool, to support a bar-shaped objective material to be machined (hereinafter simply referred to as a bar), which is securely held on a main spindle, near the machined portion of the bar defined at the leading end length of the bar. The material guide device is generally provided with a guide bush including a material support section having a hollow-tubular shape and elastically displaceable in a radial direction, and an adjusting mechanism for adjusting the radial dimension of the material support section of the guide bush.

The material guide device is optionally selected for use from two types of structures: one is a stationary structure in which the guide bush is immovably disposed relative to the bar rotating at high speed; and the other is a rotary structure in which the guide bush rotates, at high speed, together with the bar. In either structure, the material guide device supports the bar, through the material support section of the guide bush, during a turning operation, to prevent oscillation or deviation of the bar at the machined portion thereof, so as to allow a high-precision product to be formed. Further, in an automatic lathe having a configuration such that a main spindle holding a bar can provide an axial feeding motion, the material guide device, in either of the stationary or rotational structure, can support the bar, fed by the axial motion of the spindle, and accurately guide the bar in an axial direction, in a state where the material support section of the guide bush supports the bar in a centering manner (i.e., in such a manner that the material axis of the bar coincides with the rotation axis thereof).

In this type of material guide device, in order to attain both a centering support and an axial-guiding support of a bar at a desired level of performance, an objective bar to be machined is inserted into the guide bush before starting the machining operation and the adjusting mechanism is manipulated, and thereby the material support section of the guide bush is deformed or displaced elastically so as to adjust its inner diameter to match with the outer diameter of the objective bar (having a round or square shape). In the conventional material guide device, there is known an adjusting mechanism including a sleeve member, disposed so as to coaxially accommodate the guide bush and provided with a tapered pressing surface for bending the material support section radially inward, and a feed screw structure disposed in a region of an axial rear-end (or a material introducing end) of the guide bush so as to move the guide bush relative to the sleeve member in the axial direction by a mutual screwing motion of threads. The feed screw structure includes an external thread formed on the material introducing end region of the guide bush, and an adjusting nut having an internal thread adapted to be screwed on the external thread. In this adjusting mechanism, the adjusting nut is appropriately manipulated, by rotation, to move the guide bush in the axial direction and, thereby, it is possible to press a tapered outer-circumferential surface formed on the material support section against the tapered pressing surface of the sleeve member and to thus adjust the inner diameter of the material support section due to the resultant pressing force.

In the adjusting mechanism described above, an adjusting operation is necessary to manipulate the adjusting nut screwed on the axial rear-end region of the guide bush, so that, in the case where the nut is manually manipulated, operability tends to be significantly impaired by a structural member (e.g., the spindle) existing particularly at the rear side of the material guide device on the lathe bed. In order to avoid this operative inconvenience, for example, Japanese Unexamined Patent Publication (Kokai) No. 4-164501 (JP-A-04-164501) discloses a material guide device in which an adjusting nut screwed on the axial rear-end region of a guide bush can be manipulated from the side of an axial front-end (or a material lead-out end) of the guide bush. The material guide device is configured such that the adjusting nut is provided on its outer circumferential surface with a gear, and an adjusting shaft having a gear meshable with the gear of the adjusting nut is provided to be manipulated from the side of the material lead-out end of the guide bush. Typically, in order to allow a tool rest to be freely shifted relative to the bar supported on the guide bush, a suitable open space is provided at the side of the material lead-out end of the guide bush and, therefore, according to the configuration of JP-A-04-164501, the adjusting nut can be manipulated relatively easily.

Further, in order to avoid the above-described troublesome manual operation for adjusting the guide bush and to eliminate a dependency on an operational skill, various types of material guide devices including an automatic adjusting unit for automatically manipulating an adjusting nut have been also provided. For example, Japanese Unexamined Patent Publication (Kokai) No. 8-52601 (JP-A-08-052601) discloses a material guide device including an automatic adjusting unit using a hydraulic cylinder as a drive source. Also, Japanese Unexamined Patent Publication (Kokai) No. 11-235604 (JP-A-11-235604) discloses a material guide device including an automatic adjusting unit using a spindle motor or another motor as a drive source.

In the conventional material guide device disclosed in JP-A-04-164501, at an instant when the radial dimension of the material support section of the guide bush is adjusted, the force for manipulating the adjusting nut is transmitted through gears meshing with each other and, therefore, due to a backlash inevitably existing in the meshed region, it tends to be difficult to finely manipulate the adjusting nut with high precision. Further, in order to manipulate, from the front-end side, the adjusting nut existing at the rear-end side, additional components, such as an adjustment shaft and its associated components, are required to be used and, therefore, problems arise in that the number of components of the device is increased.

On the other hand, in the material guide devices including the automatic adjusting unit, as described in JP-A-08-052601 and JP-A-11-235604, it is required to equip a clamping mechanism and/or a safety unit for the adjusting nut, in addition to a drive source and a power transmission mechanism and, therefore, problems arise such that the device is significantly enlarged and the manufacturing and maintenance costs thereof are increased.

### DISCLOSURE OF THE INVENTION

It is an object of the invention to provide a material guide device, provided in an automatic lathe, which can easily adjust the radial dimension of a material support section of a guide bush with high precision, and which has a simple structure capable of preventing increases in the size and the cost of the device.

It is a further object of the present invention to provide a high-performance automatic lathe provided with such a material guide device.

In order to accomplish the above objects, the present invention provides a material guide device comprising a guide bush having a material introducing end and a material lead-out end, as axially opposite ends, and including a hollow-tubular material support section elastically displaceable in a radial direction about a guiding axis; and an adjusting mechanism for adjusting a radial dimension of the material support section of the guide bush; the adjusting mechanism comprising a carrying member carrying the guide bush, and having a front face disposed around the material lead-out end of the guide bush; a pressing member disposed near the front face of the carrying member and movable relative to the carrying member and able to make a relative linear motion along the guiding axis relative to the guide bush, the pressing member causing an elastic displacement in the radial direction on the material support section by the relative linear motion; and a feed screw structure causing the relative linear motion between the pressing member and the guide bush by a mutual screwing motion of threads.

The above-described material guide device may further comprise a manipulation section disposed near the front face of the carrying member at a position remote from the material introducing end of the guide bush, for manipulating the feed screw structure to cause the screwing motion.

Also, in the above material guide device, the feed screw structure may be provided between the carrying member and the pressing member.

In this arrangement, the guide bush may be secured relative to the carrying member in a direction along the guiding axis.

The carrying member may have an internal thread, and the pressing member may have an external thread adapted to be screwed in the internal thread to constitute the feed screw structure.

Alternatively, the carrying member may have an external thread, and the pressing member may have an internal thread adapted to be screwed on the external thread to constitute the feed screw structure.

The adjusting mechanism may further comprise a manipulating member disposed near the front face of the carrying member and adjacent to the pressing member, and the feed screw structure may be provided between the carrying member and the manipulating member.

In this arrangement, the guide bush may be secured relative to the carrying member in a direction along the guiding axis.

Alternatively, the feed screw structure may be provided between the pressing member and the guide bush.

In this arrangement, the guide bush may be secured relative to the carrying member in a rotational direction about the guiding axis.

Alternatively, the feed screw structure may be provided between the carrying member and the guide bush.

In this arrangement, the guide bush may be secured relative to the pressing member in a rotational direction about the guiding axis.

The adjusting mechanism may further comprise an anchoring member, disposed near the front face of the carrying member, for inhibiting the screwing motion of the feed screw structure.

A fitting portion may be provided between the carrying member and the pressing member, for holding the carrying member and the pressing member in a coaxial arrangement relative to each other.

A fitting portion may be provided between the carrying member and the guide bush, for holding the carrying member and the guide bush in a coaxial arrangement relative to each other.

A fitting portion may be provided between the pressing member and the guide bush, for holding the pressing member and the guide bush in a coaxial arrangement relative to each other.

The present invention also provides a material guide device, comprising a guide bush having a material introducing end and a material lead-out end, as axially opposite ends, and including a hollow-tubular material support section elastically displaceable in a radial direction about a guiding axis; and an adjusting mechanism for adjusting a radial dimension of the material support section of the guide bush; the adjusting mechanism comprises a carrying member having a front face disposed around the material lead-out end of the guide bush, and carrying the guide bush in a state as to be secured in a rotational direction about the guiding axis; a pressing member disposed, near the front face of the carrying member, to be able to make a relative linear motion along the guiding axis relative to the guide bush, the pressing member causing an elastic displacement in the radial direction on the material support section by the relative linear motion; and a feed screw structure disposed near the front face of the carrying member at a position remote from the material introducing end of the guide bush, for causing the relative linear motion between the pressing member and the guide bush by a mutual screwing motion of threads.

The present invention further provides an automatic lathe comprising the above-described material guide device installed in proximity to a working position for machining, performed on an objective material.

### BRIEF DESCRIPTION OF THE DRAWINGS

The above and other objects, features and advantages of the present invention will become more apparent from the following description of preferred embodiments in connection with the accompanying drawings, in which:
Fig. 1 is a sectional view showing a material guide device according to a first embodiment of the present invention, together with several other components of an automatic lathe equipped with the material guide device;
Fig. 2 is a sectional view of a carrying member provided in the material guide device of Fig. 1;
Fig. 3 is a sectional view of a pressing member provided in the material guide device of Fig. 1;
Fig. 4 is a sectional view showing a material guide device according to a second embodiment of the present invention;
Fig. 5 is a sectional view showing a material guide device according to a third embodiment of the present invention;
Fig. 6A is a sectional view showing a material guide device according to a fourth embodiment of the present invention;
Fig. 6B is a front view of the material guide device of Fig. 6A;
Fig. 7 is a sectional, view showing a material guide device according to a fifth embodiment of the present invention, together with several other components of an automatic lathe equipped with the material guide device;
Fig. 8A is a sectional view showing a material guide device according to a sixth embodiment of the present invention, taken along a line VIII-VIII in Fig. 8C;
Fig. 8B is a plan view of a guide bush incorporated into the material guide device of Fig. 8A; and
Fig. 8C is a front view of the material guide device of Fig. 8A.

### BEST MODES FOR CARRYING OUT THE INVENTION

The embodiments of the present invention will be described below, in detail, with reference to the accompanying drawings. In the drawings, the same or similar components are denoted by common reference numerals.

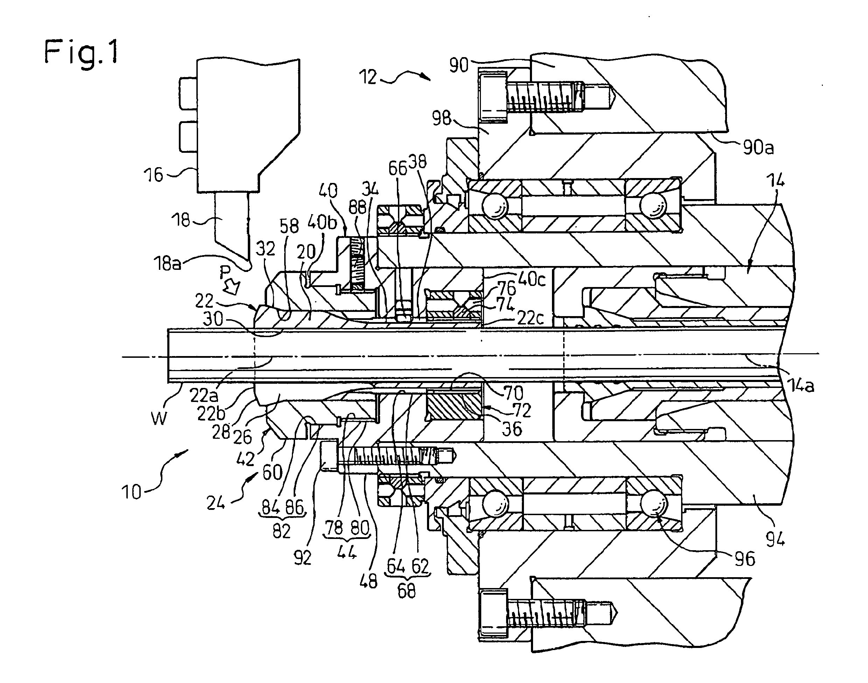

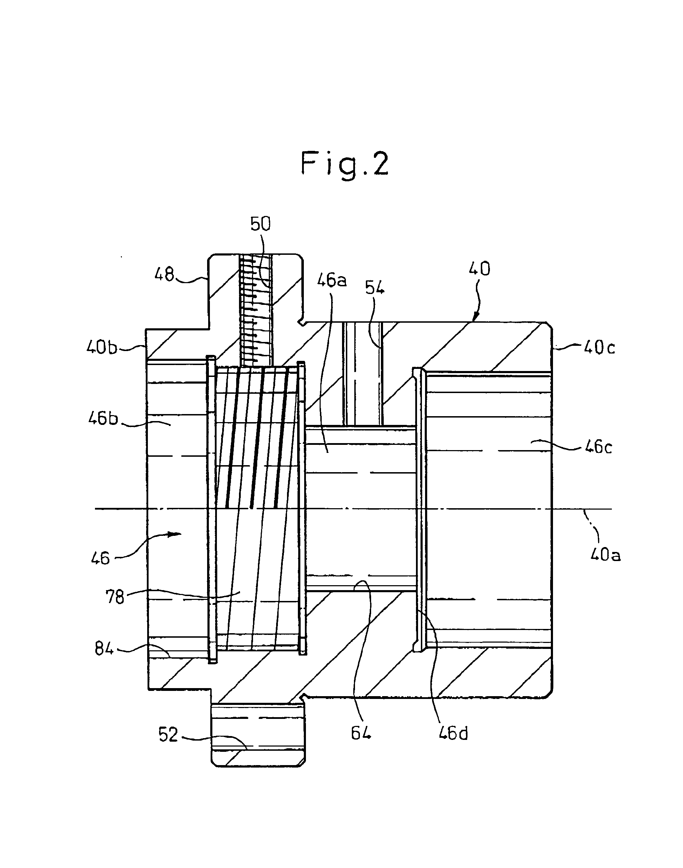

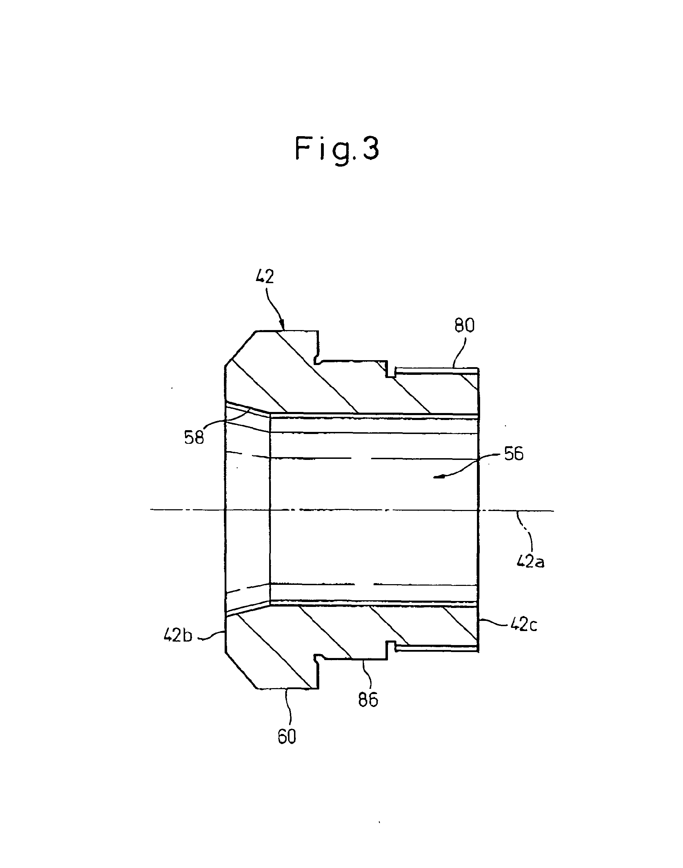

Referring to the drawings, Fig. 1 shows a material guide device 10, according to a first embodiment of the present invention, together with other components of an automatic lathe 12 equipped with the material guide device, and Figs. 2 and 3 show main and important components of the material guide device 10. In the automatic lathe 12, the material guide device 10 acts as an auxiliary support device for supporting a bar or workpiece W, securely held on a main spindle 14, near the machined portion of the bar defined in the leading end length of the bar (a tool rest 16 and a tool 18 are shown). In this connection, the material guide device 10 has a rotary type structure in which a guide bush rotates at high speed together with the bar W held on the spindle 14, during a turning operation on the automatic lathe 12. However, the present invention is not limited to this configuration, and may also be applied to a material guide device having a stationary structure in which the guide bush is immovably disposed relative to the bar W rotating at high speed.

The material guide device 10 is provided with a guide bush 22 including a material support part or section 20 having a hollow-tubular shape and elastically displaceable in a radial direction; and an adjusting mechanism 24 for adjusting a radial dimension of the material support section 20 of the guide bush 22. The guide bush 22 is a generally hollow-tubular rigid member having a central axis (referred to as a guiding axis, in this application) 22a and opening at a material leading-out end 22b and a material introducing end 22c, as axially opposite ends of the guide bush 22, wherein the material support section 20 is defined adjacent to the material leading-out end 22b.

The material support section 20 of the guide bush 22 supports the bar W in a centering manner (i.e., in such a manner that a material axis of the bar coincides with a rotation axis 14a of the spindle 14) and in a state where the bar W can be fed in the axial direction. To this end, the material support section 20 has a slotted structure capable of elastically changing its inner diameter about the guiding axis 22a, in which a plurality (e.g., three) of lengthwise divided pieces 28, formed by dividing the tubular member by a plurality (e.g., three) of slits 26 extending to and opened at the material leading-out end 22b, are elastically displaceable in the radial direction in the manner of leaf springs. Inner surfaces of the lengthwise divided pieces 28 cooperate with one another to form a material support surface 30, having a substantially cylindrical shape, for supporting the bar W in a centering manner, and tapered surfaces formed outside the lengthwise divided pieces 28 cooperate with one another to form a pressure receiving surface 32, having a truncated cone shape, for receiving an external force to displace the material support section 20 radially inward.

The material support section 20 can reduce the inner diameter of the material support surface 30 when an external force is uniformly applied to the pressure receiving surface 32 so as to elastically bend the lengthwise divided pieces 28 radially inward. From this state, as the external force applied to the material support section 20 is decreased, each of the lengthwise divided pieces 28 is elastically restored radially outward, so as to enlarge the inner diameter of the material support surface 30. Thus, in the guide bush 22, it is possible to adjust the diametral dimension of the material support surface 30 by regulating the external force applied to the material support section 20.

The guide bush 22 also includes a base 34 having a hollow-tubular shape and extending coaxially from the material support section 20 to the material introducing end 22c, the base 34 being formed integrally (or as a unitary body) with the support section 20. The base 34 is provided with an external thread 36 formed along an outer circumferential surface of a region adjacent to the material introducing end 22c. Further, a keyway 38 is formed between the material support section 20 and the external thread 36 along the outer circumferential surface of the base 34, so as to extend in the axial direction at a certain position defined by a central angle.

In this connection, the material support section 20 of the guide bush 22 may be provided at an appropriate intermediate position between the material leading-out end 22b and the material introducing end 22c.

The adjusting mechanism 24 includes a carrying member 40 carrying the guide bush 22 in a state secured in a rotational direction about the guiding axis 22a; a pressing member 42 disposed so as to be able to make a relative linear motion along the guiding axis 22a relative to the guide bush 22, and causing an elastic displacement in the radial direction on the material support section 20 by the relative linear motion; and a feed screw structure 44 causing the relative linear motion between the pressing member 42 and the guide bush 22 along the guiding axis 22a by a mutual screwing motion of threads.

As shown in Figs. 1 and 2, the carrying member 40 is a generally hollow-tubular rigid member having a central axis 40a and opening at axially opposite ends thereof. The carrying member 40 includes a stepped front face 40b disposed around the material leading-out end 22b of the guide bush 22 and a rear face 40c disposed around the material introducing end 22c of the guide bush 22 at a side opposite to the front face 40b. The carrying member 40 also includes a stepped cylindrical cavity 46 penetrating therethrough between the front and rear faces 40b, 40c in the axial direction and adapted to coaxially accommodate the guide bush 22. The cavity 46 includes a small-diameter portion 46a disposed generally at the center in the axial direction, a first large-diameter portion 46b at the side of the front face 40b, and a second large-diameter portion 46c at the side of the rear face 40c.

The carrying member 40 is provided, on an outer circumferential surface thereof, with a flange 48 formed to protrude radially outward, at a position corresponding to the first large-diameter portion 46b of the cavity 46 and somewhat remote from the front face 40b. The carrying member 40 is provided in the flange 48 thereof with one hole (e.g., an internal thread) 50 radially penetrating therethrough to communicate with the large-diameter portion 46b of the cavity 46 and a plurality of holes 52 (only one is shown) axially penetrating therethrough, formed at respective desired positions. Further, the carrying member 40 is provided with one hole 54, formed at a position corresponding to the small-diameter portion 46a of the cavity 46, radially penetrating through the wall of the carrying member to communicate with the small-diameter portion 46a.

As shown in Figs. 1 and 3, the pressing member 42 is a generally hollow-tubular rigid member having a central axis 42a and opening at axially opposite ends thereof. The pressing member 42 includes axially front and rear end faces 42b, 42c, and a cylindrical cavity 56 axially penetrating through the pressing member between the front and rear end faces 42b, 42c and adapted to coaxially accommodate the guide bush 22. The pressing member 42 is provided, on an inner circumferential surface thereof, with a pressing surface 58 having a truncated-cone shape and formed, at a position adjacent to the front end face 42b, so as to be engagable with the pressure receiving surface 32 of the guide bush 22. As described later, the pressing surface 58 is configured to be able to apply an external force to the pressure receiving surface 32 to elastically displace the material support section 20 of the guide bush 22 in the radial direction. Further, the pressing member 42 is provided, on an outer circumferential surface thereof, with a flange 60 formed to protrude radially outward at a position adjacent to the front end face 42b.

A tubular portion of the pressing member 42, defined between the flange 60 and the rear end face 42c, is coaxially received in the large-diameter portion 46b of the cavity 46 of the carrying member 40. Consequently, the pressing member 42 is disposed near the front face 40b of the carrying member 40 (i.e., remote from the rear face 40c) in a state where the front end face 42b and the flange 60 of the pressing member 42 are exposed outside the carrying member 40 (Fig. 1). In this state, the pressing member 42 can rotate about the axes 40a, 42a and also can linearly move along the axes 40a, 42a, relative to the carrying member 40. Also, in this state, the flange 60 of the pressing member 42 acts as a manipulation section for manipulating the feed screw structure 44 to cause a screwing motion, as described later.

In relation to the carrying member 40 and the pressing member 42, assembled together as described above, the guide bush 22 is accommodated in the cavity 46 of the carrying member 40 and the cavity 56 of the pressing member 42, in a state where a cylindrical outer-circumferential surface 62 (Fig. 1) of the base 34 of the guide bush 22 is in contact with a cylindrical inner-circumferential surface 64 (Fig. 2) defining the small-diameter portion 46a of the cavity 46 of the carrying member 40, and where the pressure receiving surface 32 of the material support section 20 is in contact with the pressing surface 58 of the pressing member 42. At this time, a detent 66 (Fig. 1), fitted into the hole 54 of the carrying member 40, protrudes at the end thereof from the inner circumferential surface 64 into the cavity 46, so as to be received in the keyway 38 of the guide bush 22. Further, the outer-circumferential surface 62 of the guide bush 22 and the inner-circumferential surface 64 of the carrying member 40 are uniformly in close or tight contact with each other, and act as a fitting portion 68 (Fig. 1) for holding the guide bush 22 and the carrying member 40 in a coaxial arrangement relative to each other.

A fixing nut 72 is fitted in a screwing manner to the external thread 36 formed at the axial rear end of the base 34 of the guide bush 22, the fixing nut 72 having an internal thread 70 adapted to be screwed on the external thread 36 (Fig. 1). The fixing nut 72 is received in the large-diameter portion 46c of the cavity 46 of the carrying member 40, while being screwed on the external thread 36. The fixing nut 72 is provided with an anchoring piece 74 and a piece manipulation screw 76, for inhibiting the screwing motion between the internal thread 70 and the external thread 36. Therefore, when the fixing nut 72 is properly fastened to the external thread 36 and the piece manipulation screw 76 is tightened to press the stopper piece 74 against the external thread 36, the fixing nut 72 is secured relative to the guide bush 22. In this state, the fixing nut 72 abuts against the end face 46d (Fig. 2) of the large-diameter portion 46c of the cavity of the carrying member 40 and, on the other hand, the pressure receiving surface 32 of the guide bush 22 is in contact with the pressing surface 58 of the pressing member 42, so that the guide bush 22 is secured relative to the carrying member 40 in a direction along the guiding axis 22a (particularly, tightly secured in an axially forward direction). In this manner, the guide bush 22 is carried by the carrying member 40 to be fixed in both the axial and rotational directions, and so as not to cause deviation and/or inclination between the axes 22a, 40a.

In the above configuration, the axial position of the material leading-out end 22b of the guide bush 22 on the carrying member 40 can be adjusted by optionally changing the tightening amount of the fixing nut 72 on the external thread 36 of the guide bush 22. Therefore, as described later, when the material guide device 10 is installed on the automatic lathe 12, the axial position of the material leading-out end 22b of the guide bush 22 can be adjusted appropriately in relation to the position of the tool tip 18a (Fig. 1) previously set on a lathe bed.

The feed screw structure 44 is arranged between the carrying member 40 and the pressing member 42. More specifically, the feed screw structure 44 is configured from an internal thread 78 (Fig. 2) formed on the cylindrical inner-circumferential surface of the carrying member 40 in a region of the large-diameter portion 46b adjacent to the small-diameter portion 46a of the cavity 46 of the carrying member 40, and an external thread 80 (Fig. 3) formed on the cylindrical outer-circumferential surface of the pressing member 42 in a region adjacent to the rear end face 42c of the pressing member 42. Consequently, the feed screw structure 44 is disposed near the front face 40b of the carrying member 40 (i.e., remote from the rear face 40c) at a position remote from the material introducing end 22c of the guide bush 22 (Fig. 1).

The carrying member 40 and the pressing member 42 are disposed coaxially, relative to each other, and in a state where the internal thread 78 of the carrying member 40 is properly screwed on the external thread 80 of the pressing member 42. Further, a fitting portion 82 is provided between the carrying member 40 and the pressing member 42, for holding the carrying member 40 and the pressing member 42 in a coaxial arrangement relative to each other. The fitting portion 82 is constituted by a cylindrical inner-circumferential surface 84 (Fig. 2) provided between the front face 40b and the internal thread 78 of the carrying member 40, and a cylindrical outer-circumferential surface 86 (Fig. 3) provided between the flange 60 and the external thread 80 of the pressing member 42. When the internal thread 78 of the carrying member 40 and the external thread 80 of the pressing member 42 are properly screwed with each other, the inner circumferential surface 84 of the carrying member 40 and the outer circumferential surface 86 of the pressing member 42 are uniformly in close or tight contact with each other in a slidable manner. Consequently, the pressing member 42 is carried by the carrying member 40 to be movable both in the axial and rotational directions, and so as not to cause deviation and/or inclination between the axes 42a, 40a. As a result, the pressing member 42 is arranged movably relative to the guide bush 22 both in the axial and rotational directions, and so as not to cause deviation and/or inclination between the axes 42a, 22a.

The adjusting mechanism 24 further includes an anchoring member 88 for inhibiting the screwing motion of the feed screw structure 44. The anchoring member 88 is fitted in a fixable manner into the hole 50 provided in the flange 48 of the carrying member 40, and the leading end of the anchoring member 88 penetrates the internal thread 78 and abuts against the external thread 80 (Fig. 1). Consequently, the anchoring member 88 is disposed near the front face 40b of the carrying member 40 (i.e., remote from the rear face 40c). In this connection, if the hole 50 has an internal thread as illustrated, the anchoring member 88 has an external thread adapted to be screwed in the internal thread. In this case, when the anchoring member 88 is screwed into the hole 50 and the end of the anchoring member is pressed against the external thread 80, it is possible to inhibit the screwing motion of the external thread 80 of the pressing member 42 relative to the internal thread 78 of the carrying member 40.

In the adjusting mechanism 24 configured as described above, when the pressing member 42 is rotated relative to the carrying member 40 in a desired direction while the anchoring member 88 is loosened, the pressing member 42 is linearly moved relative to the guide bush 22 and the carrying member 40 in the axial direction, under the screwing motion of the feed screw structure 44 (the internal thread 78 and the external thread 80) and the guiding function of the fitting portion 82 (the inner circumferential surface 84 and the outer circumferential surface 86). As a result, the mutual pressure generated between the pressure receiving surface 32 of the guide bush 22 and the pressing surface 58 of the pressing member 42 is changed, and thereby the inner diameter of the material support section 20 is altered. Then, at an instant when the material support section 20 of the guide bush 22 exhibits a desired inner diameter, the anchoring member 88 is used to inhibit a further screwing motion of the feed screw structure 44 (i.e., to secure the pressing member 42 relative to the carrying member 40), so that the adjustment of the dimension of the material support section 20 in the radial direction is completed. During this adjustment operation, the guide bush 22 is maintained fixed at a preset axial position, relative to the carrying member 40.

The material guide device 10 configured as described above is installed in a rotatable manner on a column 90 uprightly provided on a lathe bed (not shown) of the automatic lathe 12 (Fig. 1). To this end, the material guide device 10 further includes a guide bush spindle 94 securely coupled to the carrying member 40 via a fastener element 92 such as a bolt. The guide bush spindle 94 is secured coaxially to the carrying member 40, and is supported, through a bearing unit 96 in a rotatable and axially immovable manner, on an attachment flange 98 fixed into an attachment hole 90a of the column 90. The guide bush spindle 94 is connected with a rotational drive source (not shown), so that it can rotate synchronously with the spindle 14 of the automatic lathe 12. In a state where the material guide device 10 is properly mounted on the column 90 as described above, the guiding axis 22a of the guide bush 22 is disposed to coincide with the rotational axis 14a of the spindle 14. In this state, the guide bush 22 supports, in a centering manner, a certain length near the machined portion of the bar W securely held by the spindle 14, and thereby accurately positions the machined portion of the bar W at a working position P for machining, performed by the tool 18, which is previously set on the lathe bed.

Next, a procedure for adjusting the radial dimension of the material support section 20 of the guide bush 22 in the material guide device 10 will be described, in association with the automatic lathe 12.

In the automatic lathe 12, as a preliminary step before starting a machining program of the bar W, the radial dimension of the material support section 20 of the guide bush 22 in the material guide device 10 is adjusted to match the outer diameter of the bar W. In this adjustment operation, first, the pressing member 42 of the adjusting mechanism 24 is disposed at a most retracted position in the large-diameter portion 46b of the cavity 46 of the carrying member 40, due to the screwing motion of the feed screw structure 44 (the internal thread 78 and the external thread 80), so as to set the material support section 20 of the guide bush 22 in an opening state (i.e., in a state where substantially no pressing force is applied to the material support section 20). Then, in this bush-opening state, due to an axially feeding operation of a spindle stock (not shown), the bar W securely held on the spindle 14 is inserted from the side of the material introducing end 22c into the guide bush 22, and is located to penetrate through the material support section 20. At this time, the leading end region of the main spindle 14 is inserted into the guide bush spindle 94 and, thereby, the concentricity between the spindle 14 and the guide bush 22 is surely obtained. In this state, the rear face 40c of the carrying member 40 of the material guide device 10 is concealed by the main spindle 14 and the guide bush spindle 94.

In the bush-opening state described above, an operator operates the pressing member 42 manually for rotation, by using an appropriate tool (or directly by hand), from the side of the material leading-out end 22b of the guide bush 22 (i.e., from a space in front of the column 90). In this connection, the exposed flange 60 of the pressing member 42 can be easily manipulated as the manipulation section. Then, under the screwing motion of the feed screw structure 44 and the guiding function of the fitting portion 82, the pressing member 42 is moved and drawn out from the cavity 46 of the carrying member 40 in an axial frontward direction (a leftward direction in the drawing). Consequently, the pressing member 42 is moved in the axial frontward direction relative to the guide bush 22 and, thereby, the pressing surface 58 of the pressing member 42 applies a pressing force to the pressure receiving surface 32 of the guide bush 22. As a result, the material support section 20 of the guide bush 22 is uniformly and elastically displaced in a radial inward direction, so as to reduce the diameter of the material support surface 30.

In a state where the material support section 20 of the guide bush 22 is elastically displaced until the material support surface 30 comes into contact with the outer circumferential surface of the bar W, the spindle 14 is operated to be fed in the axial direction, and a sliding condition between the material support surface 30 and the bar W (e.g., load on a drive source for feeding the spindle, a damage on the surface of the bar, etc.) is observed. At an instant when an appropriate sliding condition is obtained while the rotational position of the pressing member 42 is finely adjusted, the pressing member 42 is secured relative to the carrying member 40 by using the anchoring member 88. In this connection, the anchoring member 88 can be manually manipulated, at the side of the material leading-out end 22b of the guide bush 22 (i.e., at a space in front of the column 90), by using an appropriate tool in a way similar to the pressing member 42. As a result, the adjustment of the dimension of the material support section 20 in the radial direction is completed, and the material support section 20 is surely anchored at an adjustment completion position by the anchoring member 88. During this adjustment operation, the guide bush 22 is maintained fixed in the axial direction relative to the carrying member 40 (therefore, to the column 90).

Thus, in the material guide device 10 configured as described above, the operation for adjusting the radial dimension of the material support section 20 of the guide bush 22 can be performed in a space, which is typically a suitable open space, adjacent to the material leading-out end 22b of the guide bush 22, by causing the screwing motion of the feed screw structure 44 disposed at the side of the material leading-out end 22b, whereby it is possible to significantly improve the operability of the adjusting operation. Further, the screwing motion of the feed screw structure 44 can be directly caused by simply manipulating the pressing member 42 for rotation, which is provided for applying the pressing force to the material support section 20, in a way similar to an adjusting nut provided in a conventional material guide device, whereby it is possible to improve the operational reliability and to prevent the number of components of the device from increasing. Moreover, the manipulation for rotating the pressing member 42 can be easily performed by a manual operation without using an automatic adjusting unit (or using a simple tool, as occasion demands), whereby it is possible to surely prevent the dimension and cost of the device from increasing.

Further, in addition to the configuration for directly operating the feed screw structure 44, an elastic restoring force of the material support section 20 of the guide bush 22 functions to always push the pressing member 42 (therefore, the external thread 80), during the adjustment operation, in one direction (a rightward direction, in the drawing) through the mutual abutment between the pressure receiving surface 32 and the pressing surface 58, whereby it is possible to eliminate any causes of error, such as a backlash generating in a case where a gear arrangement is used, from the feed screw structure 44. As a result, in the material guide device 10, it is possible to finely adjust the radial dimension of the material support section 20 of the guide bush 22 with high precision by a manual operation. Further, the fitting portions 68, 82 are provided between several members movable relative to each other, whereby it is possible to establish both a centering support and an axial-guiding support of the bar W with high precision.

In particular, the material guide device 10 is configured such that the guide bush 22 is not moved in the axial direction during the adjustment operation, and thus has an advantage that, even when the working position P for machining, performed by the tool 18 on the bar W, is required to be set in close proximity to the guide bush 22 as much as poss'ible (e.g., when the bar W is thin), it is possible to easily set the working position P. In this connection, the relative positional relationship between the material leading-out end 22b of the guide bush 22 and the working position P can be appropriately adjusted in advance, depending on the diameter and/or machining conditions of the bar W, by manipulating the fixing nut 72. Therefore, the automatic lathe 12 equipped with the above-described material guide device 10 has a high performance, which can provide easy downsizing and highly precise machining.

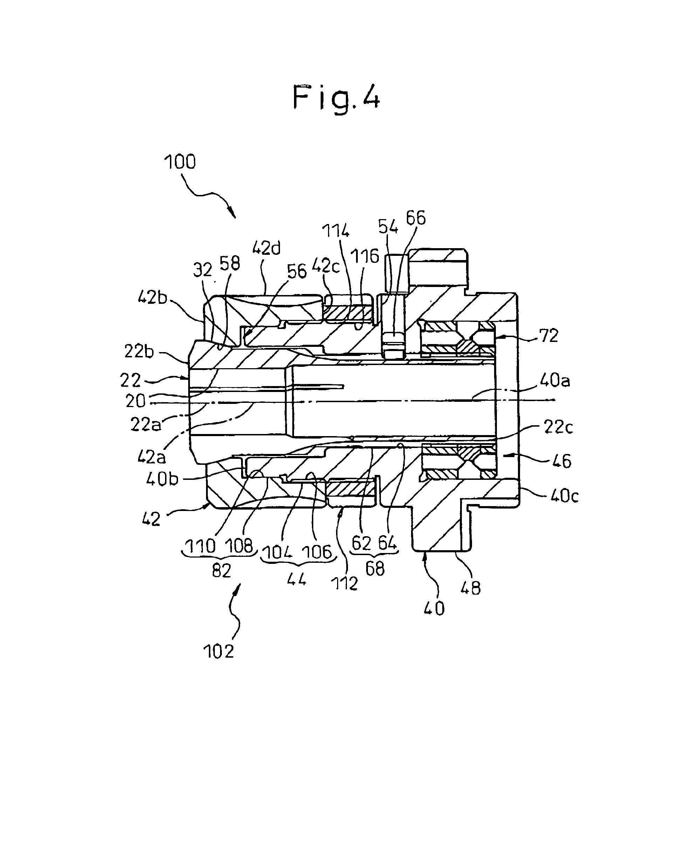

Fig. 4 shows a material guide device 100 according to a second embodiment of the present invention. The material guide device 100 has a configuration substantially identical to that of the material guide device 10 according to the above-described first embodiment, except for the configuration of a feed screw structure in an adjusting mechanism. Therefore, corresponding components are denoted by common reference numerals, and the descriptions thereof are not repeated. Further, the material guide device 100 can be installed near a working position P for machining, performed by a tool 18, on an automatic lathe 12, in a manner similar to the material guide device 10 as described above (Fig. 1).

An adjusting mechanism 102 in the material guide device 100 includes a carrying member 40, a pressing member 42 and a feed screw structure 44, in a manner similar to the adjusting mechanism 24 of the material guide device 10 described above. In the adjusting mechanism 102, the carrying member 40 is provided at a position corresponding to the large-diameter portion 46c (Fig. 2) of a cavity 46 with a flange 48, and one hole 54 communicating with the small-diameter portion 46a (Fig. 2) of the cavity 46 is formed at a position between a front face 40b and the flange 48. The pressing member 42 is provided with a cavity 56, a region of which adjacent to a rear end face 42c has a diameter larger than that of a pressing surface 58, and with an outer circumferential surface 42d having no flange. The carrying member 40 is coaxially received, at a tubular portion adjacent to the front face 40b, in the cavity 56 of the pressing member 42.

Consequently, the pressing member 42 is disposed near the front face 40b of the carrying member 40 (i.e., remote from a rear face 40c) in a state where the front end face 42b and the outer circumferential surface 42d of the pressing member 42 are exposed outside the carrying member 40. In this state, the pressing member 42 can rotate about axes 40a, 42a and can linearly move along the axes 40a, 42a, relative to the carrying member 40. Also, in this state, the outer circumferential surface 42d of the pressing member 42 acts as a manipulation section for manipulating the feed screw structure 44 to cause a screwing motion.

In association with the carrying member 40 and the pressing member 42, assembled together as described above, the guide bush 22 is accommodated in the cavities 46, 56, in a state where the pressure receiving surface 32 of the material support section 20 is in contact with the pressing surface 58 of the pressing member 42. At this time, under the functions of a detent 66, a fitting portion 68 (an outer circumferential surface 62 and an inner circumferential surface 64) and a fixing nut 72, the guide bush 22 is carried by the carrying member 40 to be fixed both in the axial and rotational directions, and so as not to cause deviation and/or inclination between the axes 22a, 40a.

The feed screw structure 44 of the adjusting mechanism 102 is arranged between the carrying member 40 and the pressing member 42, in a mutually screwing relationship in reverse to that of the feed screw structure 44 of the adjusting mechanism 24. More specifically, the feed screw structure 44 is configured from an external thread 104 formed on the cylindrical outer-circumferential surface of the carrying member 40 in a region corresponding to the large-diameter portion 46b (Fig. 2) of the cavity 46 of the carrying member 40, and an internal thread 106 formed on the cylindrical inner-circumferential surface of the pressing member 42 in a region adjacent to the rear end face 42c of the pressing member 42. Consequently, the feed screw structure 44 is disposed near the front face 40b of the carrying member 40 (i.e., remote from the rear face 40c) at a position remote from the material introducing end 22c of the guide bush 22.

The carrying member 40 and the pressing member 42 are disposed coaxially relative to each other, in a state where the external thread 104 of the carrying member 40 is properly screwed in the internal thread 106 of the pressing member 42. A fitting portion 82, provided between the carrying member 40 and the pressing member 42, is constituted by a cylindrical outer-circumferential surface 108 provided between the front face 40b and the external thread 104 of the carrying member 40, and a cylindrical inner-circumferential surface 110 provided between the pressing surface 58 and the internal thread 106 of the pressing member 42. When the external thread 104 of the carrying member 40 and the internal thread 106 of the pressing member 42 are properly screwed with each other, the outer circumferential surface 108 of the carrying member 40 and the inner circumferential surface 110 of the pressing member are uniformly in close or tight contact with each other in a slidable manner. Consequently, the pressing member 42 is carried by the carrying member 40 to be movable both in the axial and rotational directions, and so as not to cause deviation and/or inclination between the axes 42a, 40a. As a result, the pressing member 42 is arranged movably relative to the guide bush 22 both in the axial and rotational directions, and so as not to cause deviation and/or inclination between the axes 42a, 22a.

The adjusting mechanism 102 further includes an annular anchoring member 112 for inhibiting the screwing motion of the feed screw structure 44. The anchoring member 112 has an internal thread 116 adapted to be screwed on a second external thread 114 formed on the cylindrical outer-circumferential surface of the carrying member 40 in a region between the flange 48 and the external thread 104 of the carrying member 40. Consequently, the anchoring member 112 is disposed near the front face 40b of the carrying member 40 (i.e., remote from the rear face 40c). In this configuration, when the anchoring member 112 is tightly fastened relative to the second external thread 114 and the axial leading-end face of the anchoring member 112 is pressed against the rear end face 42c of the pressing member 42, it is possible to inhibit the screwing motion of the internal thread 106 of the pressing member 42 relative to the external thread 104 of the carrying member 40.

In the adjusting mechanism 102 configured as described above, when the pressing member 42 is rotated relative to the carrying member 40 in a desired direction while the anchoring member 112 is loosened, the pressing member 42 is linearly moved relative to the guide bush 22 and the carrying member 40 in the axial direction, under the screwing motion of the feed screw structure 44 (the external thread 104 and the internal thread 106) and the guiding function of the fitting portion 82 (the outer circumferential surface 108 and the inner circumferential surface 110). As a result, the mutual pressure generated between the pressure receiving surface 32 of the guide bush 22 and the pressing surface 58 of the pressing member 42 is changed, and thereby the inner diameter of the material support section 20 is altered. Then, at an instant when the material support section 20 of the guide bush 22 exhibits a desired inner diameter, the anchoring member 112 is used to inhibit a further screwing motion of the feed screw structure 44 (i.e., to secure the pressing member 42 relative to the carrying member 40), so that the adjustment of the dimension of the material support section 20 in the radial direction is completed. During this adjustment operation, the guide bush 22 is maintained in a state as to be fixed in the axial direction relative to the carrying member 40.

The material guide device 100 configured as described above can also exhibit characteristic functions and effects, equivalent to those of the material guide device 10 as described above. In particular, the material guide device 100 is configured such that the pressing member 42 is entirely disposed outside the carrying member 40, and thus has an advantage such that the pressing member 42 can be more easily operated for rotation.

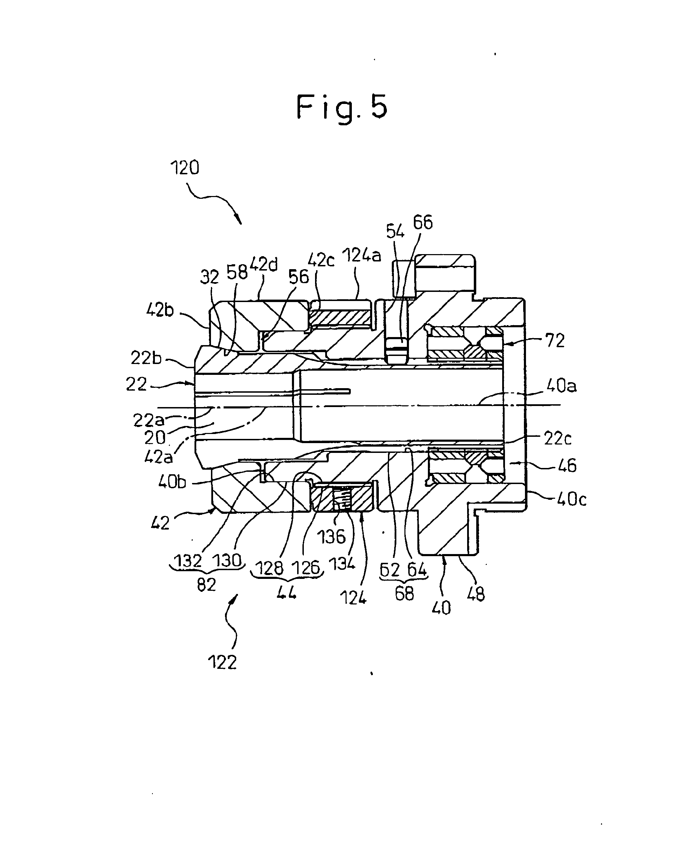

Fig. 5 shows a material guide device 120 according to a third embodiment of the present invention. The material guide device 120 has a configuration substantially identical to that of the material guide device 10 according to the above-described first embodiment, except for the configuration of a feed screw structure in an adjusting mechanism. Therefore, corresponding components are denoted by common reference numerals, and the descriptions thereof are not repeated. Further, the material guide device 120 can be installed near a working position P for machining, performed by a tool 18, on an automatic lathe 12, in a manner similar to the material guide device 10 as described above (Fig. 1).

An adjusting mechanism 122 in the material guide device 120 includes a carrying member 40, a pressing member 42 and a feed screw structure 44, in a manner similar to the adjusting mechanism 24 of the material guide device 10 described above. In the adjusting mechanism 122, the carrying member 40 is provided at a position corresponding to the large-diameter portion 46c (Fig. 2) of a cavity 46 with a flange 48, and one hole 54 communicating with the small-diameter portion 46a (Fig. 2) of the cavity 46 is formed at a position between a front face 40b and the flange 48. The pressing member 42 is provided with a cavity 56, a region of which adjacent to a rear end face 42c has a diameter larger than that of a pressing surface 58, and with an outer circumferential surface 42d having no flange. The carrying member 40 is coaxially received, at a tubular portion adjacent to the front face 40b, in the cavity 56 of the pressing member 42. Consequently, the pressing member 42 is disposed near the front face 40b of the carrying member 40 (i.e., remote from a rear face 40c) in a state where the front end face 42b and the outer circumferential surface 42d of the pressing member 42 are exposed outside the carrying member 40. In this state, the pressing member 42 can rotate about axes 40a, 42a and can linearly move along the axes 40a, 42a, relative to the carrying member 40.

In association with the carrying member 40 and the pressing member 42, assembled together as described above, the guide bush 22 is accommodated in the cavities 46, 56, in a state where the pressure receiving surface 32 of the material support section 20 is in contact with the pressing surface 58 of the pressing member 42. At this time, under the functions of a detent 66, a fitting portion 68 (an outer circumferential surface 62 and an inner circumferential surface 64) and a fixing nut 72, the guide bush 22 is carried by the carrying member 40 to be fixed both in the axial and rotational directions, and so as not to cause deviation and/or inclination between the axes 22a, 40a.

The adjusting mechanism 122 further includes an annular manipulating member 124 disposed adjacent to the pressing member 42. The feed screw structure 44 of the adjusting mechanism 122 is provided between the carrying member 40 and the manipulating member 124. More specifically, the feed screw structure 44 is configured from an external thread 126 formed on the cylindrical outer-circumferential surface of the carrying member 40 in a region corresponding to the small-diameter portion 46a (Fig. 2) of the cavity 46 of the carrying member 40, and an internal thread 128 formed on the cylindrical inner-circumferential surface of the manipulating member 124. Consequently, the manipulating member 124 and the feed screw structure 44 are disposed near the front face 40b of the carrying member 40 (i.e., remote from the rear face 40c) at a position remote from the material introducing end 22c of the guide bush 22. Further, an outer circumferential surface 124a of the manipulating member 124 is exposed outside, adjacent to the outer circumferential surface 42d of the pressing member 42, at a position near the front face 40b of the carrying member 40. In this state, the outer circumferential surface 124d of the manipulating member 124 acts as a manipulation section for manipulating the feed screw structure 44 to cause its screwing motion.

In the adjusting mechanism 122, the carrying member 40 and the pressing member 42 are provided therebetween with no screwing structure of threads, and are disposed coaxially relative to each other via only a fitting portion 82. The fitting portion 82, provided between the carrying member 40 and the pressing member 42, is constituted by a cylindrical outer-circumferential surface 130 provided between the front face 40b and the external thread 126 of the carrying member 40, and a cylindrical inner-circumferential surface 132 provided between the pressing surface 58 and the rear end face 42c of the pressing member 42. When the carrying member 40 and the pressing member 42 are properly assembled with each other, the outer circumferential surface 130 of the carrying member 40 and the inner circumferential surface 132 of the pressing member 42 are uniformly in close or tight contact with each other in a slidable manner. Consequently, the pressing member 42 is carried by the carrying member 40 to be movable both in the axial and rotational directions, and so as not to cause deviation and/or inclination between the axes 42a, 40a. As a result, the pressing member 42 is arranged movably relative to the guide bush 22 both in the axial and rotational directions, and so as not to cause deviation and/or inclination between the axes 42a, 22a.

The adjusting mechanism 122 further includes an anchoring member 134 for inhibiting the screwing motion of the feed screw structure 44. The anchoring member 134 is fitted in a fixable manner into a hole 136 formed at a desired position of the manipulation section 124 to radially penetrate therethrough, and the leading end of the anchoring member 134 penetrates the internal thread 126 and abuts against the external thread 128. Consequently, the anchoring member 134 is disposed near the front face 40b of the carrying member 40 (i.e., remote from the rear face 40c). In this connection, if the hole 136 has an internal thread, the anchoring member 134 has an external thread adapted to be screwed in the internal thread. In this case, when the anchoring member 134 is screwed into the hole 136 and the end of the anchoring member is pressed against the external thread 128, it is possible to inhibit the screwing motion of the internal thread 126 of the manipulating member 124 relative to the external thread 128 of the carrying member 40.

In the adjusting mechanism 122 configured as described above, when the manipulating member 124 is rotated relative to the carrying member 40 in a desired direction while the anchoring member 134 is loosened, the manipulating member 124 is linearly moved relative to the carrying member 40 in the axial direction, under the screwing motion of the feed screw structure 44 (the external thread 126 and the internal thread 128) and, following thereto, the pressing member 42 is linearly moved relative to the guide bush 22 and the carrying member 40 in the axial direction, under the guiding function of the fitting portion 82 (the outer circumferential surface 130 and the inner circumferential surface 132). As a result, the mutual pressure generated between the pressure receiving surface 32 of the guide bush 22 and the pressing surface 58 of the pressing member 42 is changed and, thereby, the inner diameter of the material support section 20 is altered. Then, at an instant when the material support section 20 of the guide bush 22 exhibits a desired inner diameter, the anchoring member 134 is used to inhibit a further screwing motion of the feed screw structure 44 (i.e., to secure the manipulating member 124 relative to the carrying member 40), so that the adjustment of the dimension of the material support section 20 in the radial direction is completed. During this adjustment operation, the guide bush 22 is maintained in a state as to be fixed in the axial direction relative to the carrying member 40.

The material guide device 120 configured as described above can also exhibit characteristic functions and effects, equivalent to those of the material guide device 10 as described above.

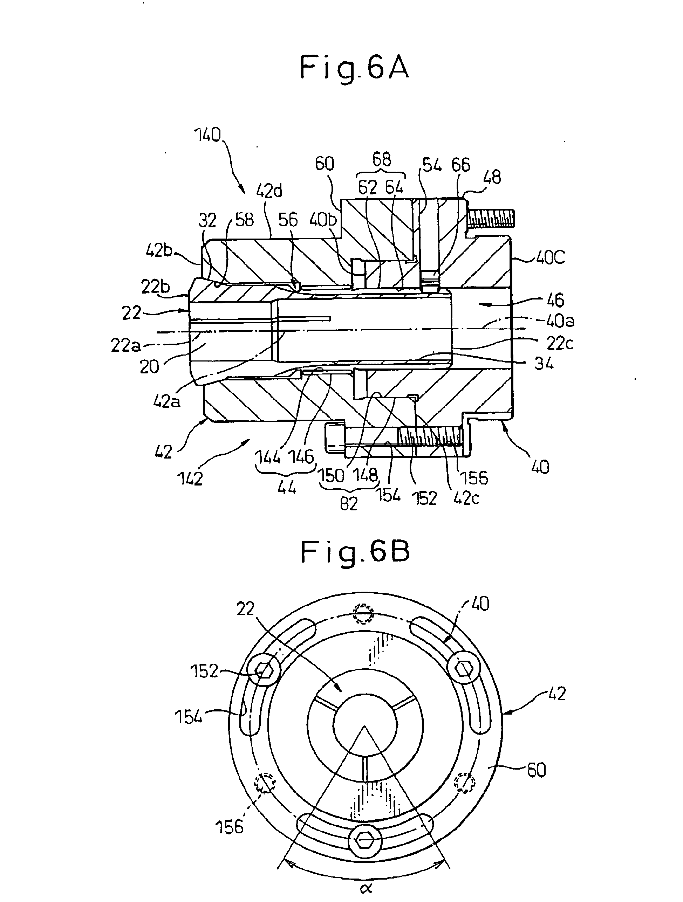

Fig. 6A shows a material guide device 140 according to a fourth embodiment of the present invention. The material guide device 140 has a configuration substantially identical to that of the material guide device 10 according to the above-described first embodiment, except for the configuration of an adjusting mechanism. Therefore, corresponding components are denoted by common reference numerals, and the descriptions thereof are not repeated. Further, the material guide device 140 can be installed near a working position P for machining, performed by a tool 18, on an automatic lathe 12, in a manner similar to the material guide device 10 as described above (Fig. 1).

An adjusting mechanism 142 in the material guide device 140 includes a carrying member 40, a pressing member 42 and a feed screw structure 44, in a manner similar to the adjusting mechanism 24 of the material guide device 10 described above. In the adjusting mechanism 142, the carrying member 40, having a cylindrical cavity 46 with a substantially entirely uniform inner diameter, is provided substantially at an axial center of an outer circumferential surface with a flange 48, and one radial hole 54 communicating with the cavity 46 is formed in the flange 48. The pressing member 42 is provided with a stepped cylindrical cavity 56, the regions of which adjacent to a front end face 42b and a rear end face 42c having extended diameters, and with a flange 60 on an outer circumferential surface 42d in a region adjacent to the rear end face 42c. The carrying member 40 is coaxially received, at a tubular portion adjacent to a front face 40b, in the large-diameter portion of the cavity 56, adjacent to the rear end face 42c, of the pressing member 42.

Consequently, the pressing member 42 is disposed near the front face 40b of the carrying member 40 (i.e., remote from the rear face 40c) in a state where the front end face 42b and the outer circumferential surface 42d of the pressing member 42 are exposed outside the carrying member 40. In this state, the pressing member 42 can rotate about axes 40a, 42a, and can linearly move along the axes 40a and 42a, relative to the carrying member 40. Further, in this state, the outer circumferential surface 42d of the pressing member 42 acts as a manipulation section for manipulating the feed screw structure 44 to cause a screwing motion.

In association with the carrying member 40 and the pressing member 42, assembled together as described above, the guide bush 22 is accommodated in the cavities 46, 56, in a state where the pressure receiving surface 32 of the material support section 20 is in contact with the pressing surface 58 of the pressing member 42. At this time, under the functions of a detent 66 and a fitting portion 68 (an outer circumferential surface 62 and an inner circumferential surface 64), the guide bush 22 is carried by the carrying member 40 to be fixed in the rotational direction, and so as not to cause deviation and/or inclination between the axes 22a, 40a. In this connection, in the material guide device 140, the fixing nut 72 (Fig. 1) for securing the guide bush 22 in the axial direction is not used.

The feed screw structure 44 of the adjusting mechanism 142 is provided between the pressing member 42 and the guide bush 22. More specifically, the feed screw structure 44 is configured from an internal thread 144 formed, on the cylindrical inner-circumferential surface of the pressing member 42, in a region corresponding to the substantially axial-center small-diameter portion of the cavity 56 of the pressing member 42, and an external thread 146 formed on the cylindrical outer-circumferential surface of the base 34 near the proximal end of the material support section 20 of the guide bush 22. Consequently, the feed screw structure 44 is disposed near the front face 40b of the carrying member 40 (i.e., remote from the rear face 40c) at a position remote from the material introducing end 22c of the guide bush 22.

In the adjusting mechanism 142, the carrying member 40 and the pressing member 42 are provided therebetween with no screwing structure of threads, and are disposed coaxially relative to each other via only a fitting portion 82. The fitting portion 82, provided between the carrying member 40 and the pressing member 42, is constituted by a cylindrical outer-circumferential surface 148 provided between the front face 40b and the flange 48 of the carrying member 40, and a cylindrical inner-circumferential surface 150 provided between the internal thread 144 and the rear end face 42c of the pressing member 42. When the carrying member 40 and the pressing member 42 are properly assembled with each other, the outer circumferential surface 148 of the carrying member 40 and the inner circumferential surface 150 of the pressing member 42 are uniformly in close or tight contact with each other in a slidable manner. Consequently, the pressing member 42 is carried by the carrying member 40 to be movable in the rotational direction, and so as not to cause deviation and/or inclination between the axes 42a, 40a. As a result, the pressing member 42 is arranged movably relative to the guide bush 22 both in the axial and rotational directions, and so as not to cause deviation and/or inclination between the axes 42a, 40a.

The adjusting mechanism 142 further includes an anchoring member 152 for inhibiting the screwing motion of the feed screw structure 44. The pressing member 42 is provided, at a desired circumferential position of the flange 60, with an oblong hole 154 circumferentially extending in an arcuate shape and formed to axially penetrate therethrough, and the anchoring member 152 is received in the oblong hole 154 movably relative to each other. On the other hand, in the carrying member 40, a hole 156 is formed at a desired circumferential position of the flange 48 to penetrate therethrough. The anchoring member 152, received in the oblong hole 154 of the pressing member 42, is also received at the leading end thereof in, and secured to, the hole 156 of the carrying member 40. Consequently, the anchoring member 152 is disposed near the front face 40b of the carrying member 40 (i.e., remote from the rear face 40c).

In this connection, if the hole 156 of the carrying member 40 has an internal thread as illustrated, the anchoring member 152 is configured as a bolt having an external thread adapted to be screwed in the internal thread. In this case, when the anchoring member 152 is screwed into the hole 156 and the head thereof is pressed against the flange 60 of the pressing member 42, it is possible to inhibit the rotation of the pressing member 42 about the axis 42a relative to the carrying member 40 and, as a result, to inhibit the screwing motion of the internal thread 144 of the pressing member 42 relative to the external thread 146 of the guide bush 22.

In the adjusting mechanism 142 configured as described above, when the pressing member 42 is rotated relative to the carrying member 40 in a desired direction while the anchoring member 152 is slightly loosened, the guide bush 22 is linearly moved relative to the pressing member 42 and the carrying member 40 in the axial direction, under the screwing motion of the feed screw structure 44 (the internal thread 144 and the external thread 146) and the guiding function of the fitting portion 68 (the outer circumferential surface 62 and the inner circumferential surface 64). As a result, the mutual pressure generated between the pressure receiving surface 32 of the guide bush 22 and the pressing surface 58 of the pressing member 42 is changed and, thereby, the inner diameter of the material support section 20 is altered. Then, at an instant when the material support section 20 of the guide bush 22 exhibits a desired inner diameter, the anchoring member 152 is used to inhibit a further screwing motion of the feed screw structure 44 (i.e., to secure the pressing member 42 relative to the carrying member 40), so that the adjustment of the dimension of the material support section 20 in the radial direction is completed. Thus, in the material guide device 140, during the adjustment operation, the pressing member 42 is not moved relative to the carrying member 40 in the axial direction, but instead the guide bush 22 is moved slightly relative to the carrying member 40 in the axial direction.

In the above configuration, for example, three oblong holes 154 in total may be formed in the flange 60 of the pressing member 42 at regular intervals in the circumferential direction, while six holes 156 in total may be formed in the flange 48 of the carrying member 40 at regular intervals in the circumferential direction, as shown in Fig. 6B. In this configuration, three anchoring members 152 are inserted one by one into the three oblong holes 154, and are respectively secured to the optionally selected three holes 156. In this state, if a rotatable angle α (60 degrees, in the drawing) of the pressing member 42, defined by each oblong hole 154, is insufficient for a radial-dimension adjusting amount required for the material support section 20 of the guide bush 22, each of the anchoring members 152 is temporarily detached from the associating hole 156 at an instant when the pressing member 42 is disposed at a limit angle position (i.e., a rotational position where each anchoring member 152 is located at one end region of each oblong hole 154). At the limit angle position, the other end region of each oblong hole 154 is superimposed on another remaining hole 156, prepared as a supplementary hole, whereby it is possible to secure again each anchoring member 152 to each supplementary hole 156. After that, the pressing member 42 can be further rotated, so as to adjust the radial dimension of the material support section 20 of the guide bush 22.

The material guide device 140 configured as described above can also exhibit characteristic functions and effects, equivalent to those of the material guide device 10 as described above. It should be noted that the material guide device 140 has a configuration wherein the guide bush 22 slightly moves in the axial direction relative to the carrying member 40 during the adjustment operation of the radial dimension of the material support section 20, so that it is possible to preferably adopt the material guide device 140 in a case where a working position P for machining, performed by a tool 18 on a bar W, is not necessarily to be set in close proximity to the guide bush 22 (e.g., when the bar W is thick).

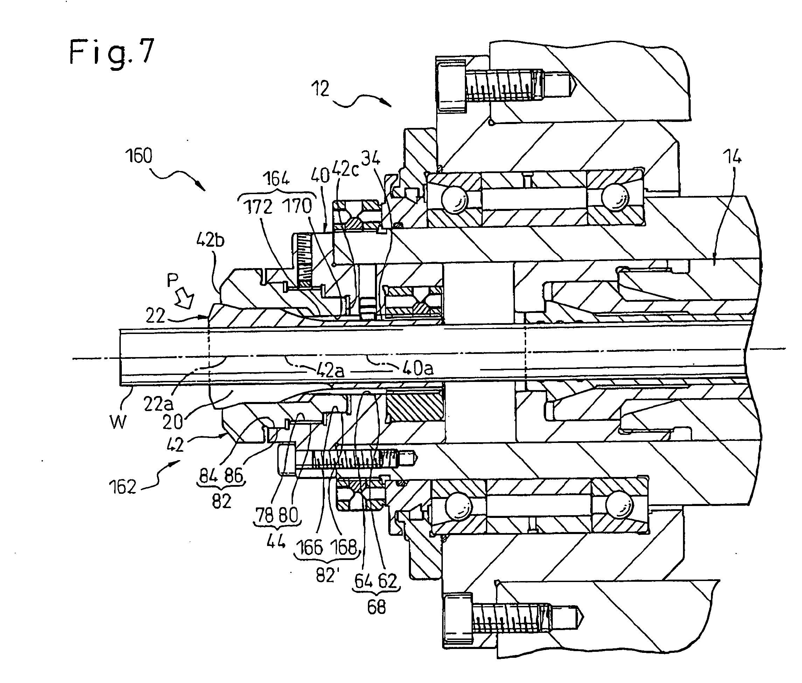

Fig. 7 shows a material guide device 160 according to a fifth embodiment of the present invention. The material guide device 160 has a configuration substantially identical to that of the material guide device 10 according to the above-described first embodiment, except for the configuration of a fitting portion in an adjusting mechanism. Therefore, corresponding components are denoted by common reference numerals, and the descriptions thereof are not repeated. Further, the material guide device 160 can be installed near a working position P for machining, performed by a tool 18 (Fig. 1), on an automatic lathe 12, in a manner similar to the material guide device 10 as described above.

An adjusting mechanism 162 in the material guide device 160 includes a carrying member 40, a pressing member 42 and a feed screw structure 44, in a manner similar to the adjusting mechanism 24 of the material guide device 10 described above. The adjusting mechanism 162 differs from the adjusting mechanism 24 in a point that an increased number of, i.e., two, fitting portions 82 are provided between the carrying member 40 and the pressing member 42, and a fitting portion 164 is additionally provided between the pressing member 42 and the guide bush 22, for holding them in a coaxial arrangement relative to each other. The remaining configuration of the adjusting mechanism 162 is substantially identical to that of the adjusting mechanism 24.

As two fitting portions provided between the carrying member 40 and the pressing member 42, in addition to the first fitting portion 82 constituted by the inner circumferential surface 84 of the carrying member 40 and the outer circumferential surface 86 of the pressing member 42, the second fitting portion 82' is provided, which is constituted by a cylindrical inner-circumferential surface 166 provided between the inner circumferential surface 64 and the internal thread 78 of the carrying member 40, and a cylindrical outer-circumferential surface 168 provided between the rear end face 42c and the external thread 80 of the pressing member 42. When the internal thread 78 of the carrying member 40 and the external thread 80 of the pressing member 42 are properly screwed with each other, the inner circumferential surfaces 84, 166 of the carrying member 40 and the outer circumferential surfaces 86, 168 of the pressing member 42 are uniformly in close or tight contact with each other in a slidable manner, respectively. Consequently, the pressing member 42 is carried by the carrying member 40 to be movable both in the axial and rotational directions, and so as not to cause deviation and/or inclination between the axes 42a, 40a.

On the other hand, the fitting portion 164 provided between the pressing member 42 and the guide bush 22 is constituted by a cylindrical inner-circumferential surface 170 adjacent to the rear end face 42c of the pressing member 42, and a cylindrical outer-circumferential surface 172 of the base 34, located near the proximal end of the material support section 20 of the guide bush 22. Due to the functions of these fitting portions 82, 82' and 164, the pressing member 42 is arranged movably relative to the guide bush 22 both in the axial and rotational directions, and so as not to cause deviation and/or inclination between the axes 42a, 22a.

The material guide device 160 configured as described above can also exhibit characteristic functions and effects, equivalent to those of the material guide device 10 as described above. In particular, in the material guide device 160, the deviation and/or inclination among the axes 42a, 40a, 22a can be more surely eliminated between the pressing member 42 and the carrying member 40 and also between the pressing member 42 and the guide bush 22, whereby it is possible for the guide bush 22 to establish both a centering support and an axial-guiding support of the bar W with further high precision.

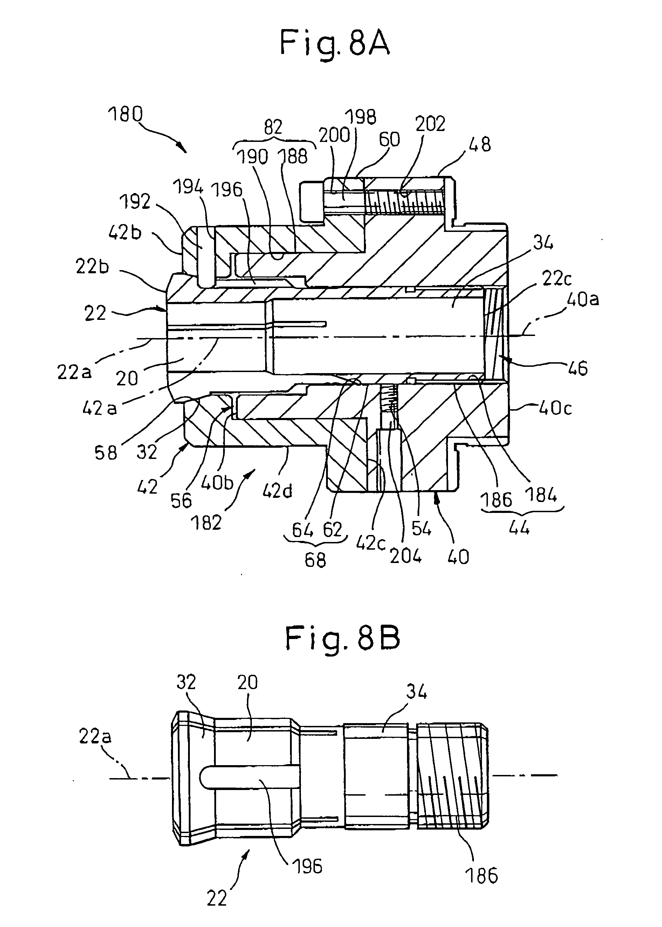

Fig. 8A shows a material guide device 180 according to a sixth embodiment of the present invention. The material guide device 180 has a configuration substantially identical to that of the material guide device 10 according to the above-described first embodiment, except for the configuration of an adjusting mechanism. Therefore, corresponding components are denoted by common reference numerals, and the descriptions thereof are not repeated. Further, the material guide device 180 can be installed near a working position P for machining, performed by a tool 18, on an automatic lathe 12, in a manner similar to the material guide device 10 as described above (Fig. 1).

An adjusting mechanism 182 in the material guide device 180 includes a carrying member 40, a pressing member 42 and a feed screw structure 44, in a manner similar to the adjusting mechanism 24 of the material guide device 10 described above. In the adjusting mechanism 182, the carrying member 40 has a stepped cylindrical cavity 46, a region of which adjacent to a front face 40b has a slightly extended diameter, and is provided substantially at an axial center of an outer circumferential surface with a flange 48, and one radial hole 54 communicating with the cavity 46 is formed in the flange 48. The pressing member 42 is provided with a stepped cylindrical cavity 56, a region of which adjacent to a rear end face 42c has a diameter larger than a pressing surface 58, and with a flange 60 on an outer circumferential surface 42d in a region adjacent to the rear end face 42c. The carrying member 40 is coaxially received, at a tubular portion adjacent to a front face 40b, in the large-diameter portion of the cavity 56 of the pressing member 42.

Consequently, the pressing member 42 is disposed near the front face 40b of the carrying member 40 (i.e., remote from the rear face 40c) in a state where the front end face 42b and the outer circumferential surface 42d of the pressing member 42 are exposed outside the carrying member 40. In this state, the pressing member 42 can rotate about axes 40a, 42a, and can linearly move along the axes 40a, 42a, relative to the carrying member 40. Further, in this state, the outer circumferential surface 42d of the pressing member 42 acts as a manipulation section for manipulating the feed screw structure 44 to cause its screwing motion.

In association with the carrying member 40 and the pressing member 42, assembled together as described above, the guide bush 22 is accommodated in the cavities 46, 56, in a state where the pressure receiving surface 32 of the material support section 20 is in contact with the pressing surface 58 of the pressing member 42. At this time, under the function of the fitting portion 68 (the outer circumferential surface 62 and the inner circumferential surface 64), the guide bush 22 is carried by the carrying member 40 to be fixed in the rotational direction, and so as not to cause deviation and/or inclination between the axes 22a, 40a. In this connection, in the material guide device 180, the fixing nut 72 (Fig. 1) for securing the guide bush 22 in the axial direction is not used.

The feed screw structure 44 of the adjusting mechanism 182 is provided between the carrying member 40 and the guide bush 22. More specifically, the feed screw structure 44 is configured from an internal thread 184 formed on the cylindrical inner-circumferential surface of the carrying member 40 in a region of the cavity 46 adjacent to the rear face 40c of the carrying member 40, and an external thread 186 formed on the cylindrical outer-circumferential surface of the base 34 of the guide bush 22 in a region adjacent to the material introducing end 22c. Consequently, different from the first to fifth embodiments, the feed screw structure 44 is disposed near the rear face 40c of the carrying member 40 (i.e., remote from the front face 40b) at a position near the material introducing end 22c of the guide bush 22.

In the adjusting mechanism 182, the carrying member 40 and the pressing member 42 are provided therebetween with no screwing structure of threads, and are disposed coaxially relative to each other via only a fitting portion 82. The fitting portion 82, provided between the carrying member 40 and the pressing member 42, is constituted by a cylindrical outer-circumferential surface 188 provided between the front face 40b and the flange 48 of the carrying member 40, and a cylindrical inner-circumferential surface 190 provided between the pressing surface 58 and the rear end face 42c of the pressing member 42. When the carrying member 40 and the pressing member 42 are properly assembled with each other, the outer circumferential surface 188 of the carrying member 40 and the inner circumferential surface 190 of the pressing member 42 are uniformly in close or tight contact with each other in a slidable manner. Consequently, the pressing member 42 is carried by the carrying member 40 to be movable in the rotational direction, and so as not to cause deviation and/or inclination between the axes 42a, 40a. As a result, the pressing member 42 is arranged movably relative to the guide bush 22 in the axial direction, and so as not to cause deviation and/or inclination between the axes 42a, 22a.

Further, the adjusting mechanism 182 includes a transmission member 192 for transmitting the rotation of the pressing member 42 to the guide bush 22, during an adjustment operation described later. The pressing member 42 is provided with one hole 194 formed to radially penetrate therethrough between the outer circumferential surface 42d and the pressing surface 58, and the transmission member 192 having a function similar to a detent is fitted and inserted into the hole 194. On the other hand, the guide bush 22 is provided, on the outer circumferential surface of the material support section 20, with a keyway 196 extending in parallel with the axis 22a and formed at a certain position defined by a central angle (see Fig. 8B.) When the guide bush 22 is properly assembled with the carrying member 40 and the pressing member 42, the transmission member 192, fitted into the hole 194 of the pressing member 42, protrudes at the end thereof from the pressing surface 58 radially inward, so as to be received in the keyway 196 of the guide bush 22. In this embodiment, the base 34 of the guide bush 22 is not provided with the keyway 38 (Fig. 1)

The adjusting mechanism 182 further includes an anchoring member 198 (Fig. 8A) for inhibiting the screwing motion of the feed screw structure 44. The pressing member 42 is provided, at a desired circumferential position of the flange 60, with an oblong hole 200 circumferentially extending in an arcuate shape and formed to axially penetrate therethrough, and the anchoring member 198 is received in the oblong hole 200 movably relative to each other. On the other hand, in the carrying member 40, a hole 202 is formed at a desired circumferential position of the flange 48 to penetrate therethrough. The anchoring member 198, received in the oblong hole 200 of the pressing member 42, is also received at the leading end thereof in, and secured to, the hole 202 of the carrying member 40. Consequently, the anchoring member 198 is disposed near the front face 40b of the carrying member 40 (i.e., remote from the rear face 40c).

In this connection, if the hole 202 of the carrying member 40 has an internal thread as illustrated, the anchoring member 198 is configured as a bolt having an external thread adapted to be screwed in the internal thread. In this case, when the anchoring member 198 is screwed into the hole 202 and the head thereof is pressed against the flange 60 of the pressing member 42, it is possible to inhibit the rotation of the pressing member 42 about the axis 42a relative to the carrying member 40 and, as a result, to inhibit the screwing motion of the external thread 186 of the guide bush 22 relative to the internal thread 184 of the carrying member 40.

In the adjusting mechanism 182 configured as described above, when the pressing member 42 is rotated relative to the carrying member 40 in a desired direction while the anchoring member 198 is slightly loosened, the guide bush 22 is rotated in a desired direction about the axis 22a to follow the rotation of the pressing member, and is linearly moved relative to the pressing member 42 and the carrying member 40 in the axial direction, under the screwing motion of the feed screw structure 44 (the internal thread 184 and the external thread 186) and the guiding function of the fitting portion 68 (the outer circumferential surface 62 and the inner circumferential surface 64). As a result, the mutual pressure generated between the pressure receiving surface 32 of the guide bush 22 and the pressing surface 58 of the pressing member 42 is changed, and thereby the inner diameter of the material support section 20 is altered. Then, at an instant when the material support section 20 of the guide bush 22 exhibits a desired inner diameter, the anchoring member 198 is used to inhibit a further screwing motion of the feed screw structure 44 (i.e., to secure the pressing member 42 relative to the carrying member 40), so that the adjustment of the dimension of the material support section 20 in the radial direction is completed. Thus, in the material guide device 180, during the adjustment operation, the pressing member 42 is not moved relative to the carrying member 40 in the axial direction but, instead, the guide bush 22 is moved slightly relative to the carrying member 40 in the axial direction.

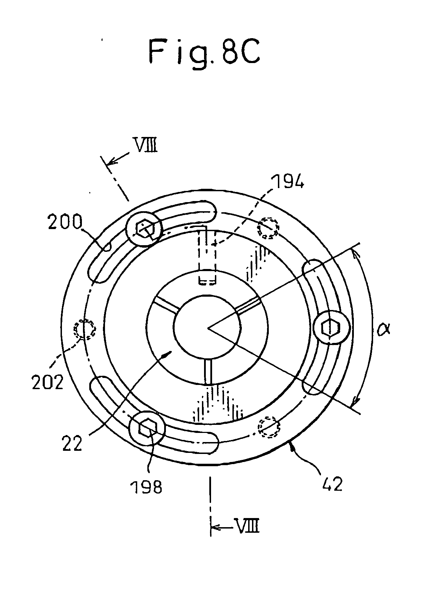

In the above configuration, for example, three oblong holes 200 in total may be formed in the flange 60 of the pressing member 42 at regular intervals in the circumferential direction, while six holes 202 in total may be formed in the flange 48 of the carrying member 40 at regular intervals in the circumferential direction, as shown in Fig. 8C. In this configuration, three anchoring members 198 are inserted one by one into the three oblong holes 200, and are respectively secured to the optionally selected three holes 202. In this state, if a rotatable angle α (60 degrees, in the drawing) of the pressing member 42, defined by each oblong hole 200, is insufficient for a radial-dimension adjusting amount required for the material support section 20 of the guide bush 22, each of the anchoring members 198 is temporarily detached from the associating hole 202 at an instant when the pressing member 42 is disposed at a limit angle position (i.e., a rotational position where each anchoring member 198 is located at one end region of each oblong hole 200). At the limit angle position, the other end region of each oblong hole 200 is superimposed on another remaining hole 202, prepared as a supplementary hole, whereby it is possible to secure again each anchoring member 198 to each supplementary hole 202. After that, the pressing member 42 can be further rotated, so as to adjust the radial dimension of the material support section 20 of the guide bush 22.

The material guide device 180 configured as described above can also exhibit characteristic functions and effects, equivalent to those of the material guide device 10 as described above. It should be noted that the material guide device 180 has a configuration wherein the guide bush 22 slightly moves in the axial direction relative to the carrying member 40 during the adjustment operation of the radial dimension of the material support section 20, so that it is possible to preferably adopt the material guide device 180 in a case where a working position P for machining, performed by a tool 18 on a bar W, is not necessarily to be set in close proximity to the guide bush 22 (e.g., when the bar W is thick).

In particular, the material guide device 180 has a configuration in which the rotation of the guide bush 22 causes the screwing motion of the feed screw structure 44, whereby the operation for adjusting the radial dimension of the material support section 20 of the guide bush 22 can be performed at a space, typically a suitable open space, adjacent to the material leading-out end 22b of the guide bush 22, in spite of the configuration wherein the feed screw structure 44 is arranged at the side of the material introducing end 22c of the guide bush 22. Further, the screwing motion of the feed screw structure 44 can be directly caused by integrally rotating the pressing member 42 together with the guide bush 22, whereby it is possible to improve operational reliability and to prevent the number of components of the device from increasing.

The material guide device 180 described above may further be provided with an auxiliary anchoring member 204 for mechanically inhibiting wobbling of the guide bush 22 in the rotational direction, which may be otherwise caused by a clearance between the transmission member 192 provided in the pressing member 42 and the keyway 196 provided in the guide bush 22. As shown in Fig. 8A, the auxiliary anchoring member 204 may be constituted by a set screw fitted into the radial hole 54 in the carrying member 40. In this case, a corresponding internal thread is formed in the radial hole 54 of the carrying member 40. When the auxiliary anchoring member 204 constituted by the set screw is tightened into the radial hole 54 of the carrying member 40, the leading end face of the auxiliary anchoring member can be abutted firmly against the outer circumferential surface of the base 34 of the guide bush 22 received in the cavity 46 of the carrying member 40.

During the adjustment operation of the radial dimension of the material support section 20 of the guide bush 22, the pressing member 42 and the guide bush 22 are integrally rotated while the auxiliary anchoring member 204 as the set screw is loosened. Then, upon the completion of the adjustment operation of the radial dimension of the material support section 20, the anchoring member 198 is tightened into the hole 202 of the carrying member 40 as described above, and the auxiliary anchoring member 204 is also tightened into the hole 54 of the carrying member 40, whereby it is possible to firmly secure the guide bush 22 in its rotational direction. The above-described configuration of the auxiliary anchoring member 204 is effective to preliminarily prevent a slight fluctuation of the radial dimension of the material support section 20, which is otherwise caused by a positional deviation of the guide bush 22 in the rotational direction during a high speed rotation of the material guide device 180. In this connection, each of the material guide devices 10, 100, 120, 140 and 160, according to the first to fifth embodiments described above, can also be equipped with an auxiliary anchoring member having a similar configuration.

While some preferred embodiments according to the present invention has been described above, it will be understood that the invention is not restricted to these embodiments and that various changes and modifications may be made without departing from the disclosure of the claims.

While the invention has been described with reference to preferred embodiments thereof, it will be understood, by those skilled in the art, that various changes and modifications may be made thereto without departing from the spirit and scope of the following claims.

## Claims

1. A material guide device, comprising:
a guide bush having a material introducing end and a material lead-out end, as axially opposite ends, and including a hollow-tubular material support section elastically displaceable in a radial direction about a guiding axis; and
an adjusting mechanism for adjusting a radial dimension of said material support section of said guide bush;
said adjusting mechanism comprising:
a carrying member carrying said guide bush, and having a front face disposed around said material lead-out end of said guide bush;
a pressing member disposed near said front face of said carrying member and movable relative to said carrying member and able to make a relative linear motion along said guiding axis relative to said guide bush, the pressing member causing an elastic displacement in said radial direction on said material support section by said relative linear motion; and
a feed screw structure causing said relative linear motion between said pressing member and said guide bush by a mutual screwing motion of threads.

2. A material guide device as set forth in claim 1, further comprising a manipulation section disposed near said front face of said carrying member at a position remote from said material introducing end of said guide bush, for manipulating said feed screw structure to cause said screwing motion.

3. A material guide device as set forth in claim 1, wherein said feed screw structure is provided between said carrying member and said pressing member.

4. A material guide device as set forth in claim 3, wherein said guide bush is secured relative to said carrying member in a direction along said guiding axis.

5. A material guide device as set forth in claim 3, wherein said carrying member has an internal thread; and wherein said pressing member has an external thread adapted to be screwed on said internal thread to constitute said feed screw structure.

6. A material guide device as set forth in claim 3, wherein said carrying member has an external thread; and wherein said pressing member has an internal thread adapted to be screwed on said external thread to constitute said feed screw structure.

7. A material guide device as set forth in claim 1, wherein said adjusting mechanism further comprises a manipulating member disposed near said front face of said carrying member and adjacent to said pressing member; and wherein said feed screw structure is provided between said carrying member and said manipulating member.

8. A material guide device as set forth in claim 7, wherein said guide bush is secured relative to said carrying member in a direction along said guiding axis.

9. A material guide device as set forth in claim 1, wherein said feed screw structure is provided between said pressing member and said guide bush.

10. A material guide device as set forth in claim 9, wherein said guide bush is secured relative to said carrying member in a rotational direction about said guiding axis.

11. A material guide device as set forth in claim 1, wherein said feed screw structure is provided between said carrying member and said guide bush.

12. A material guide device as set forth in claim 11, wherein said guide bush is secured relative to said pressing member in a rotational direction about said guiding axis.

13. A material guide device as set forth in claim 1, wherein said adjusting mechanism further comprises an anchoring member, disposed near said front face of said carrying member, for inhibiting said screwing motion of said feed screw structure.

14. A material guide device as set forth in claim 1, wherein a fitting portion is provided between said carrying member and said pressing member, for holding said carrying member and said pressing member in a coaxial arrangement relative to each other.

15. A material guide device as set forth in claim 1, wherein a fitting portion is provided between said carrying member and said guide bush, for holding said carrying member and said guide bush in a coaxial arrangement relative to each other.

16. A material guide device as set forth in claim 1, wherein a fitting portion is provided between said pressing member and said guide bush, for holding said pressing member and said guide bush in a coaxial arrangement relative to each other.

17. An automatic lathe comprising the material guide device as set forth in claim 1, wherein said material guide device is installed in proximity to a working location of machining of an objective material.

18. A material guide device, comprising:
a guide bush having a material introducing end and a material lead-out end, as axially opposite ends, and including a hollow-tubular material support section elastically displaceable in a radial direction about a guiding axis; and
an adjusting mechanism for adjusting a radial dimension of said material support section of said guide bush;
said adjusting mechanism comprises:
a carrying member having a front face disposed around said material lead-out end of said guide bush, and carrying said guide bush in a state as to be secured in a rotational direction about said guiding axis;
a pressing member disposed, near said front face of said carrying member, to be able to make a relative linear motion along said guiding axis relative to said guide bush, the pressing member causing an elastic displacement in said radial direction on said material support section by said relative linear motion; and
a feed screw structure disposed near said front face of said carrying member at a position remote from said material introducing end of said guide bush, for causing said relative linear motion between said pressing member and said guide bush by a mutual screwing motion of threads.

19. An automatic lathe comprising the material guide device as set forth in claim 18, wherein said material guide device is installed in proximity to a working position for machining, performed on an objective material.
